# FASCICULE DE BREVET EUROPEEN

(11) **EP 0 547 933 B1**
(45) Date de publication et mention de la délivrance du brevet: **12.04.1995**
(21) Numéro de dépôt: 92403247.7
(22) Date de dépôt: 01.12.1992
(51) Int. Cl.: B61H 13/20, B60T 17/04, B60T 17/10, B61H 9/00

(54) **Système de freinage d'un véhicule destiné à circuler sur des réseaux imposant des normes différentes**
Bremssystem eines Fahrzeuges, bestimmt für den Umlauf in Eisenbahnnetzen verschiedener Norm
Brake system of a vehicle assigned to circulate on railway systems having different standards

(30) Priorité: 18.12.1991 FR 9116075
(43) Date de publication de la demande: 23.06.1993
(73) Titulaire: ARBEL FAUVET RAIL S.A., F-59500 Douai (FR)
(72) Inventeur: Maniak, Stanislas, F-59169 Cantin (FR)
(74) Mandataire: Ecrepont, Robert

(56) Documents cités:
- DE-A- 1 816 298
- DE-C- 143 622
- DE-C- 188 484
- DE-C- 921 508

## Description

L'invention se rapporte à un système de freinage d'un véhicule destiné à circuler sur des réseaux imposant des normes différentes.

Elle se rapporte plus particulièrement mais non exclusivement aux véhicules ferroviaires.

Pour leur freinage ces véhicules comprennent chacun :
- des moyens de freinage tels des sabots agissant au moins indirectement sur les roues du véhicule et,
- des moyens d'actionnement de ces moyens de freinage.

Ces moyens d'actionnement sont habituellement constitués par :
- un moyen moteur apte à développer une force de freinage et,
- un moyen de transmission de la force développée par le moyen moteur à l'ensemble des moyens de freinage.

Le moyen de transmission le plus couramment utilisé est une timonerie formée de tringles et de leviers.

Quant au moyen moteur, il se compose généralement :
- d'un vérin ou cylindre de frein dont l'une des extrémités de l'ensemble du corps et de la tige est fixée en un point de la timonerie tandis que l'autre extrémité est fixée soit au châssis du véhicule, soit à un autre point de la timonerie,
- de distributeurs alimentant les cylindres de frein en fluide sous pression et contrôlant la vidange du cylindre de frein.

Les distributeurs sont reliés d'une part à au moins une canalisation principale d'amenée du fluide sous pression présentant à chaque extrémité du véhicule des moyens de raccordement avec la canalisation principale d'un autre véhicule, et d'autre part, un réservoir auxiliaire. La canalisation porte encore des robinets d'arrêt.

La disparité des normes entre certains réseaux a pour conséquence de créer des problèmes lors du transport notamment des marchandises d'un réseau vers un autre.

Par exemple, dans le domaine du transport ferroviaire, les organes de tamponnement, l'écartement des voies ferrées peuvent être différents d'un réseau à un autre.

Par exemple, pour cet écartement qui est de 1435 millimètres pour la majorité des pays d'Europe de l'Ouest, tandis qu'il est de 1520 millimètres pour l'Union Soviétique, oblige à monter des essieux différents au passage d'un réseau à un autre et à régler les positions des sabots de freinage.

Outre ces différences d'écartement, tous les constituants des matériels et accessoires de ces wagons sont généralement également différents.

Si pour des éléments ne nécessitant que peu ou pas d'opérations de maintenance, tels la timonerie de frein, cela n'est pas un handicap, il n'en est pas de même pour certaines piêces essentielles du système de freinage montées sur chaque wagon et qui nécessitent de fréquentes interventions, telles les réservoirs, cylindre et distributeur

En effet, même si ces pièces pouvaient convenir et résister aux pressions de services imposées sur ces deux réseaux, resterait entier le problème de la difficulté d'en assurer, pendant la circulation sur un réseau, la maintenance des pièces répondant aux normes d'un autre réseau car il serait alors difficile sinon impossible de se procurer suffisamment rapidement des pièces détachées.

Compte tenu de l'augmentation croissante du trafic entre réseaux différents, il était primordial de résoudre ce problème afin de pouvoir utiliser les mêmes véhicules sur les deux réseaux et d'éviter ainsi les opérations de transbordement du contenu des wagons lors du passage des frontières.

Dans ce but, on peut imaginer que les pièces essentielles, telles les cylindres de frein, réservoirs auxiliaires et distributeurs soient doubles, chacune d'elles répondant aux normes d'un réseau et que sur chacun de ces réseaux, on puisse utiliser celui de ces moyens répondant aux normes du réseau et donc aisé à entretenir.

Les doubles cylindres de frein sont bien entendu associés au moyen de transmission par un dispositif d'accouplement.

Un des résultats que l'invention vise à obtenir est un système de freinage de type précité qui comprend un tel dispositif d'accouplement qui permette à l'un des vérins d'exercer une force sur le moyen de transmission sans pour autant exercer une force sur les autres vérins et sans que ces derniers freinent la manoeuvre du moyen de transmission.

A cet effet, l'invention se rapporte à un système de freinage selon la revendication 1.

L'invention sera bien comprise à la lecture de la description ci-après faite à titre d'exemple non limitatif en regard des dessins ci-annexés qui représentent :

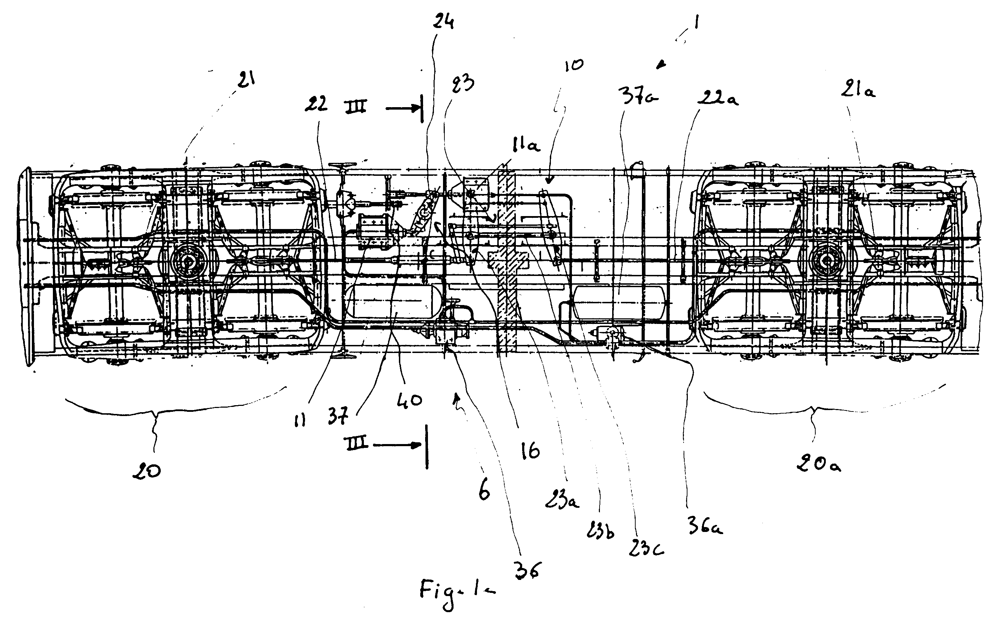

- figure 1 : vue de dessous d'un véhicule,

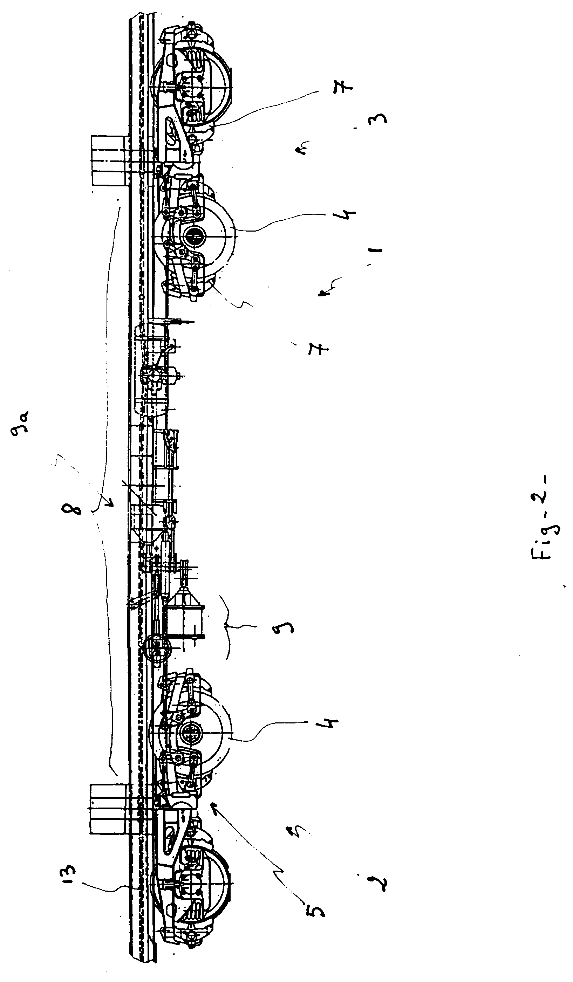

- figure 2 : vue latérale du véhicule selon figure 1,

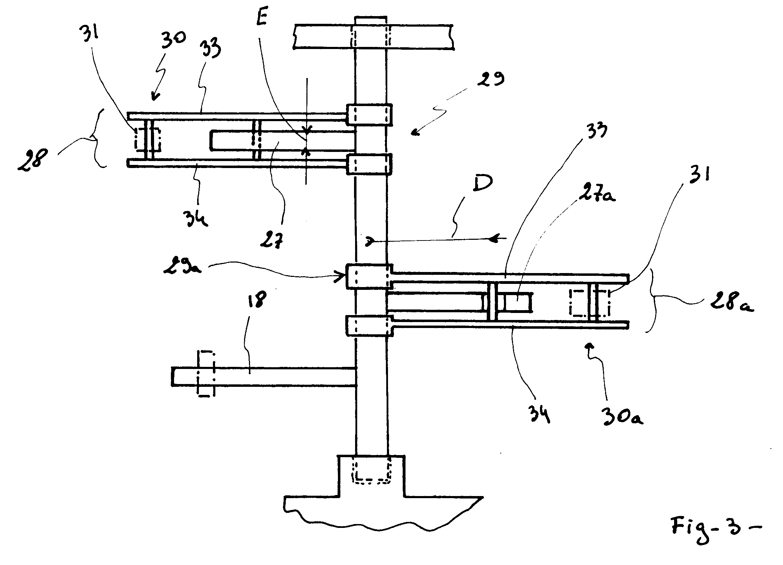

- figure 3 : coupe III III selon figure 1,

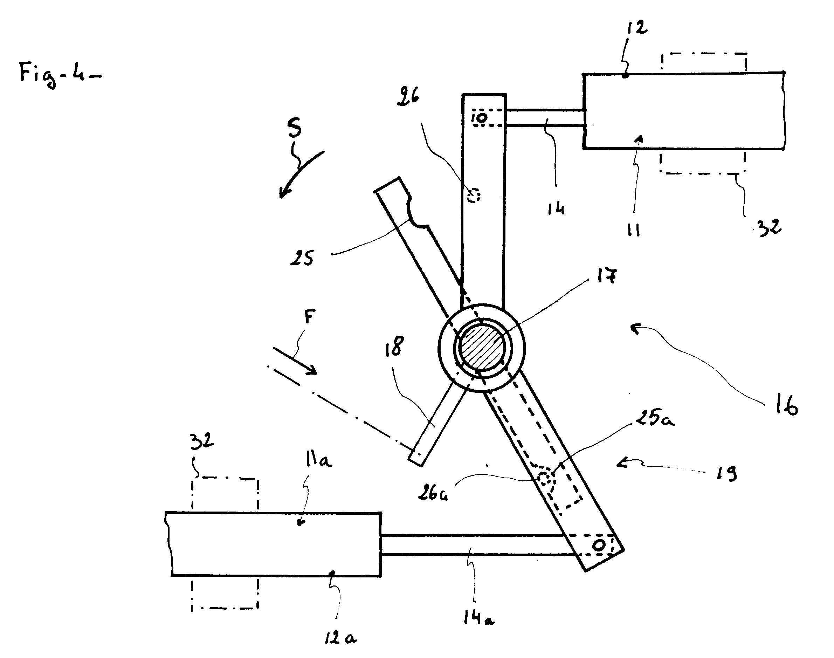

- figure 4 : vue de dessus d'un détail de réalisation,

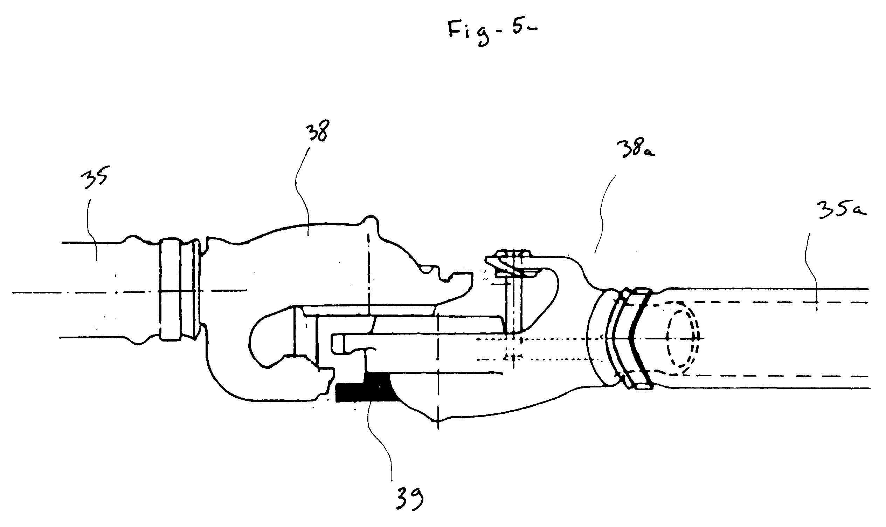

- figure 5 : vue à d'un autre détail du système de freinage.

En se reportant au dessin, on voit que le véhicule 1 est supporté au moins à l'une 2 de ses extrémités 2, 3 par des organes de roulement 4.

Plus particulièrement mais non exclusivement, il s'agit d'un véhicule ferroviaire 1 supporté à ses extrémités par des bogies 5.

Pour son freinage, il est prévu un système de freinage 6 qui comprend :
- des moyens de freinage 7 agissant au moins indirectement sur au moins certaines des roues 4 du véhicule,
- des moyens d'actionnement 8 des moyens de freinage 7.

Ces moyens d'actionnement 8 se composent :
- d'au moins deux moyens moteurs 9, 9a qui, lorsque l'un est actif, les autres sont neutralisés, lesquels moyens moteurs sont aptes à développer une force de freinage F,
- d'un unique moyen 10 de transmission, au moyen de freinage 7, de la force de freinage F produite par le moyen moteur 9, 9a rendu actif, ce moyen de transmission 10 consistant en une timonerie.

Classiquement, chaque moyen moteur 9, 9a comprend :
- un vérin 11, 11a dont le corps 12, 12a est fixé au châssis 13 du véhicule et dont la tige 14, 14a, en se déplaçant, manoeuvre la timonerie 10 et,
- un moyen de distribution d'un fluide sous pression au vérin.

Les moyens moteur 9, 9a commandent une même timonerie, ainsi chaque tige 14, 14a de vérin est associé à un même moyen de transmission 10 par un dispositif d'accouplement 16, lequel comprend :
- d'une part un arbre 17 de commande guidé en rotation autour d'un axe fixe par rapport au châssis qui, par un moyen de liaison 18, tel un levier lié en rotation avec l'arbre de commande 17, entraine la manoeuvre du moyen de transmission 10 et,
- d'autre part, coopérant avec l'arbre 17, autant des moyens d'accouplement 19 avec les extrêmités des tiges 14, 14a des vérins que de moyens moteurs 9, 9a.

Dans l'exemple représenté, le système de freinage 6 comprend deux moyens moteurs 9, 9a.

Sont également prévus deux groupes 20, 20a de moyens 7 de freinage et le moyen de transmission 10 comprend pour chaque groupe 20, 20a de freinage une timonerie 21, 21a qui est actionnée par une tringle principale 22, 22a.

Pour un freinage sensiblement simultané sur les deux groupes 20, 20a de freinage, les tringles principales 22, 22a sont reliées au dispositif d'accouplement 16 par l'intermédiaire d'un moyen 23 de répartition de la force de freinage F sur les deux tringles principales.

Par exemple, ce dernier moyen 23 consiste en un jeu de balanciers 23a, 23b, 23c.

Egalement sur au moins l'une des tringles principale, est monté un régleur 24 de frein rattrapant automatiquement l'usure des moyens de freinage.

Selon l'invention :
- chaque moyen d'accouplement 19 est formé :
   . d'une part, d'une pièce 25, 25a dite d'appui liée en rotation avec l'arbre de commande 17, disposée sensiblement radialement à celui-ci et,
   . d'autre part, d'un moyen 26, 26a dit complémentaire qui, associé au déplacement de la tige 14, 14a du vérin, ne s'accouple avec une butée sur la pièce d'appui 25, 25a pour entraîner l'arbre de commande 17 et le levier 18 en rotation que lorsque la tige du vérin se déplace dans un sens S prédéterminé dit sens de freinage,
- les pièces 25, 25a d'appui et des moyens complémentaires 26, 26a sont agencés autour de l'arbre 17 de telle sorte que lorsqu'un des moyens complémentaires 26, 26a s'accouple avec la pièce 25, 25a d'appui correspondante, les autres moyens complémentaires et pièces d'appui se désaccouplent.

De préférence :
- les éléments que sont la pièce 25, 25a d'appui et le moyen complémentaire 26, 26a consistent l'un en un crochet porté à une certaine distance D de l'axe de l'arbre de commande par un levier 27, 27a et l'autre en un doigt porté par un levier 28, 28a à une même distance D de l'axe de l'arbre de commande 17 autour duquel l'extrémité 29, 29a correspondante du levier 28 est montée libre en rotation qui, lorsque la tige du vérin qui est associée à son extrémité 30 se déplace dans le sens dit de freinage, vient s'engager dans le crochet 25, 25a,
- les crochets 25, 25a ayant leurs concavités tournées dans un même sens trigonométrique et dans le sens du freinage, les tiges 14, 14a des vérins 11, 11a des moyens moteur 9, 9a agissent dans le sens trigonométrique inverse de celui dans lequel sont tournées les concavités des crochets.

Le sens trigonométrique, à savoir le sens direct ou le sens rétrograde du parcours d'un cercle sera choisi en fonction de la disposition du moyen de liaison 18 avec le moyen de transmission 10 et ceci par rapport à l'arbre 17.

Ainsi, lorsque la tige du vérin actif se déplace dans le sens de freinage, le levier 28, 28a libre en rotation autour de l'arbre 17 tourne autour de cet arbre pour, dans un premier temps, venir en appui sur une butée de la pièce d'appui puis, en poursuivant son mouvement, entraîne l'arbre 17 via la pièce d'appui.

Dans l'exemple représenté, les deux vérins sont montés tête bêche et lorsque l'un des doigts s'engage dans la concavité du crochet correspondant et entraine en rotation l'arbre, l'autre doigt reste immobile et le crochet correspondant s'éloigne de ce doigt.

Il n'y a donc pas d'inter-action entre les vérins.

Lorsque l'arbre n'est plus sollicité par le vérin actif, celui-ci revient en position initiale grâce à un moyen de rappel (non représenté).

De préférence, le corps 12, 12a du vérin est associé au châssis 13 du véhicule par un moyen 32 de fixation autorisant dans le plan de rotation des leviers 28, 28a, un débattement angulaire du vérin 11, 11a.

De préférence, l'articulation 31 entre la tige 14, 14a ou vérin et le levier 28, 28a est d'un type permettant à la tige du vérin d'avoir une trajectoire rectiligne et au levier une trajectoire courbe sans induire de contrainte sur l'un ou l'autre des éléments 28, 28a, 14, 14a.

De préférence, le levier 28, 28a qui porte le doigt 26, 26a est formé de deux leviers 33, 34 parallèles entre eux, lesquels sont distants l'un de l'autre d'une distance au moins légèrement supérieure à l'épaisseur E maximale de l'ensemble que forment le crochet et le levier portant ledit crochet et qui est logé entre les deux leviers 33, 34.

Les leviers portant les doigts associés à des moyens moteur différents seront de préférence par rapport à l'axe de l'arbre de commande diamétralement opposés.

Bien évidemment, la crochet pourrait être associé à la pièce d'appui et le doigt au levier 28, 28a.

Pour l'alimentation en fluide de l'un des vérins, le moyen de distribution comprend classiquement une conduite principale 35, 35a, un distributeur 36, 36a, des robinets d'arrêt (non représentés) ainsi qu'un réservoir auxiliaire 37, 37a de fluide.

La conduite principale 35, 35a doit être raccordée au moins à l'une de ses extrémités à un dispositif de commande (non représenté) fournissant le fluide sous pression ou dans le cas de la constitution d'une rame de véhicules, doit être raccordée de chaque côté aux véhicules l'encadrant, ceci grâce à des raccords 38, 38a de connexion.

Ainsi, dans l'exemple représenté, il est prévu deux conduites principales dont les raccords 38, 38a de connexion sont chacun prévus pour un territoire donné.

De préférence, afin de différencier ces raccords 38, 38a de connexion de sorte qu'il ne soit pas possible d'associer un raccord d'un type avec un raccord d'un autre type, l'un des deux raccords est muni d'un moyen mécanique 39 de différenciation tel un détrompeur.

Ce détrompeur 39 est réalisé de telle sorte qu'il permette toujours d'associer deux raccords du même type mais interdit l'association avec un autre type.

Par le choix de celui des raccords qui est utilisé, on détermine celui des vérins qui pourra être actif et celui qui est neutralisé.

Sur l'arbre 17 du dispositif d'accouplement est bien entendu prévu un levier annexe sur lequel agit un frein à main par l'intermédiaire d'une tringle 40.

## Revendications

1. Système de freinage pour un véhicule destiné à circuler sur des réseaux imposant des normes différentes, comprenant :
- des moyens de freinage (7) agissant au moins indirectement sur au moins certaines des roues (4) du véhicule,
- des moyens d'actionnement (8) des moyens de freinage (7),
lesquels moyens d'actionnement (8) se composent :
- d'au moins deux moyens moteurs (9, 9a) qui, lorsque l'un est actif, les autres sont neutralisés, lesquels moyens moteurs sont aptes à développer une force de freinage (F),
- d'un unique moyen (10) de transmission, au moyen de freinage (7), de la force de freinage (F) produite par le moyen moteur (9, 9a) rendu actif, ce moyen de transmission (10) consistant en une timonerie,
les moyens moteur (9, 9a) commandent une même timonerie, ainsi chaque tige (14, 14a) de vérin est associé au même moyen de transmission (10) par un dispositif d'accouplement (16), lequel comprend :
- d'une part un arbre (17) de commande guidé en rotation autour d'un axe fixe par rapport au châssis qui, par un moyen de liaison (18), tel un levier lié en rotation avec l'arbre de commande (17), entraine la manoeuvre du moyen de transmission (10) et,
- d'autre part, coopérant avec l'arbre (17), autant des moyens d'accouplement (19) avec les extrêmités des tiges (14, 14a) des vérins que de moyens moteurs (9, 9a),
ce système de freinage étant **CARACTERISE** en ce que :
- chaque moyen d'accouplement (19) est formé :
. d'une part, d'une pièce (25, 25a) dite d'appui liée en rotation avec l'arbre de commande (17), disposée sensiblement radialement à celui-ci et,
. d'autre part, d'un moyen (26, 26a) dit complémentaire qui, associé au déplacement de la tige (14, 14a) du vérin, ne s'accouple avec une butée sur la pièce d'appui (25, 25a) pour entraîner l'arbre de commande (17) et le levier (18) en rotation que lorsque la tige ou vérin se déplace dans un sens prédéterminé dit sens de freinage,
- les pièces (25, 25a) d'appui et les moyens complémentaires (26, 26a) sont agencés autour de l'arbre (17) de telle sorte que lorsqu'un des moyens complémentaires (26, 26a) s'accouple avec la pièce (25, 25a) d'appui correspondante, les autres moyens complémentaires et pièces d'appui se désaccouplent.

2. Système de freinage selon la revendication 1 **caractérisé** en ce que :
- les éléments que sont la pièce (25, 25a) d'appui et le moyen complémentaire (26, 26a) consistent l'un en un crochet porté à une certaine distance (D) de l'axe de l'arbre de commande par un levier (27, 27a) et l'autre en un doigt porté par un levier (28, 28a) à une même distance (D) de l'axe de l'arbre de commande (17) autour duquel l'extrémité (29) correspondante du levier (28) est montée libre en rotation qui, lorsque la tige du vérin qui est associée à son extrémité (30) se déplace dans le sens dit de freinage, vient s'engager dans le crochet (25, 25a),
- les crochets (25, 25a) ayant leurs concavités tournées dans un même sens trigonométrique et dans le sens du freinage, les tiges (14, 14a) des vérins (11, 11a) des moyens moteur (9, 9a) agissent dans le sens trigonométrique inverse de celui dans lequel sont tournées les concavités des crochets.

3. Système de freinage selon la revendication 1 ou 2 **caractérisé** en ce que le corps (12, 12a) du vérin est associé au châssis (13) du véhicule par un moyen (32) de fixation autorisant dans le plan de rotation des leviers (28, 28a), un débattement angulaire du vérin (11, 11a).

4. Système de freinage selon la revendication 1 ou 2 **caractérisé** en ce que l'articulation (31) entre la tige (14, 14a) du vérin et le levier (28, 28a) est d'un type permettant à la tige du vérin d'avoir une trajectoire rectiligne et au levier une trajectoire courbe sans induire de contrainte sur l'un ou l'autre des éléments (28, 28a, 14, 14a).

5. Système de freinage selon l'une quelconque des revendications 1 à 4 **caractérisé** en ce que le levier (28, 28a) qui porte le doigt (26, 26a) est formé de deux leviers (33, 34) parallèles entre eux, lesquels sont distants l'un de l'autre d'une distance au moins légèrement supérieure à l'épaisseur (E) maximale de l'ensemble que forment le crochet et le levier portant ledit crochet et qui est logé entre les deux leviers (33, 34).

6. Système de freinage selon l'une quelconque des revendications 1 à 5 **caractérisé** en ce que les leviers portant les doigts associés à des moyens moteur différents sont par rapport à l'axe de l'arbre de commande diamétralement opposés.

7. Système de freinage selon la revendication 1 dont, pour l'alimentation en fluide de l'un des vérins, le moyen de distribution comprend une conduite principale (35, 35a), un distributeur (36, 36a), des robinets d'arrêt ainsi qu'un réservoir auxiliaire (37, 37a) de fluide et dont la conduite principale (35, 35a) doit être raccordée au moins à l'une de ses extrémités à un dispositif de commande fournissant le fluide sous pression ou dans le cas de la constitution d'une rame de véhicules, doit être raccordée de chaque côté aux véhicules l'encadrant, ceci grâce à des raccords (38, 38a) de connexion, **caractérisé** en ce qu'afin de différencier ces raccords (38, 38a) de connexion de sorte qu'il ne soit pas possible d'associer un raccord d'un type avec un raccord d'un autre type, l'un des deux raccords est muni d'un moyen mécanique (39) de différenciation.

8. Système de freinage selon la revendication 7 **caractérisé** en ce que le moyen mécanique (39) est un détrompeur.

## Claims

1. A braking system for a vehicle intended to travel on networks with different standard specifications, comprising:
- braking means (7) acting at least indirectly on at least some of the wheels (4) of the vehicle;
- means (8) to actuate the braking means (7);
the said actuating means (8) comprising:
- at least two driving means (9, 9a), and when one thereof is active, the others are neutral, the said driving means being capable of developing a braking force (F);
- a single transmission means (10), for transmitting to the braking means (7) the braking force (F) produced by that driving means (9, 9a) which is active, the said transmission means (10) comprising a rod assembly;
and the driving means (9, 9a) control the same rod assembly, and thus each rod (14, 14a) of a jack is associated with the same transmission means (10) via a coupling device (16) comprising:
- a control shaft (17) which is guided in rotation about a fixed axis in relation to the chassis and which, via connecting means (18) such as a lever rotationally linked to the control shaft (17), entrains the operation of the transmission means (10); and
- a number of means (19) for coupling to the ends of the jack rods (14, 14a), this number being equal to the number of driving means (9, 9a), the said means (19) co-operating with the shaft (17);
the said braking system being **characterised in that**
- each coupling means (19) is formed by:
- a so-called supporting part (25, 25a) rotationally linked to the control shaft (17) and arranged substantially radially thereto; and
- a so-called complementary means (26, 26a) which is associated with the displacement of the rod (14, 14a) of the jack, and is only coupled with a stop device on the supporting part (25, 25a) - to entrain the control shaft (17) and the lever (18) in rotation - when the jack rod is displaced in a pre-determined direction, referred to as the braking direction,
- the supporting parts (25, 25a) and the complementary parts (26, 26a) are arranged about the shaft (17) in such a manner that when one of the complementary means (26, 26a) is coupled with the corresponding supporting part (25, 25a), the other complementary means and supporting parts become uncoupled.

2. A braking system in accordance with claim 1, **characterised in that**
- the members forming the supporting part (25, 25a) and the complementary means (26, 26a) respectively comprise a hook supported on a lever (27, 27a) at a certain distance (D) from the axis of the control shaft, and a finger supported on a lever (28, 28a) at the same distance (D) from the axis of the control shaft (17), about which the corresponding end (29) of the lever (28) is mounted so as to rotate freely, and the lever (28), when the jack rod associated with its end (30) is displaced in the so-called braking direction, engages in the hook (25, 25a);
- given that the hooks (25, 25a) have their concave portions oriented in the same trigonometrical direction and in the direction of braking, the rods (14, 14a) of the jacks (11, 11a) of the driving means (9, 9a) act in the opposite trigonometrical direction to that in which the concave portions of the hooks are oriented.

3. A braking system in accordance with claim 1 or 2, **characterised in that** the body (12, 12a) of the jack is associated with the frame (13) of the vehicle via a securing means (32) permitting an angular clearance of the jack (11, 11a) in the plane of rotation of the levers (28, 28a).

4. A braking system in accordance with claim 1 or 2, **characterised in that** the joint (31) between the rod (14, 14a) of the jack and the lever (28, 28a) is of a type allowing the rod of the jack to have a rectilinear path and allowing the lever to have a curved path without inducing stress on either of the members (28, 28a, 14, 14a).

5. A braking system in accordance with any one of claims 1 to 4, **characterised in that** the lever (28, 28a) supporting the finger (26, 26a) is formed by two parallel levers (33, 34), spaced at a distance which is at least slightly greater than the maximum thickness (E) of the assembly formed by the hook and the lever supporting the said hook, the said assembly being positioned between the two levers (33, 34).

6. A braking system in accordance with any one of claims 1 to 5, **characterised in that** the levers supporting the fingers associated with different driving means are diametrically opposed in relation to the axis of the control shaft.

7. A braking system in accordance with claim 1, wherein, to supply one of the jacks with fluid, the distributing means comprises a principal conduit (35, 35a), a distributor (36, 36a), regulating taps and an auxiliary fluid reservoir (37, 37a), and wherein the principal conduit (35, 35a) must be connected at least at one of its ends to a control device supplying the fluid under pressure, or in the case of construction of a set of vehicles, must be connected at each side to the vehicles enclosing it, this being achieved by means of connectors (38, 38a), **characterised in that** in order to differentiate between the said connectors (38, 38a) so that it is not possible to associate a connector of one type with a connector of another type, one of the two connectors is fitted with a mechanical means (39) for differentiation.

8. A braking system in accordance with claim 7, **characterised in that** the mechanical means (39) is a polarising element.

## Patentansprüche

1. Bremssystem für ein für den Verkehr auf unterschiedlichen Normen entsprechenden Schienennetzen bestimmtes Fahrzeug, welches folgendes aufweist:
- eine Bremseinrichtung (7), welche zumindest indirekt auf mindestens bestimmte Räder (4) des Fahrzeugs einwirkt,
- eine Betätigungseinrichtung (8) für die Bremseinrichtung (7),
wobei die Betätigungseinrichtung (8) sich folgendermaßen zusammensetzt:
- aus mindestens zwei Antriebseinrichtungen (9, 9a), von denen dann, wenn eine von ihnen aktiviert ist, die anderen neutral geschaltet sind, und von welchen eine Bremskraft (F) erzeugbar ist,
- aus einer einzigen Übertragungseinrichtung (10) zur Übertragung der von der jeweils aktiven Antriebseinrichtung (9, 9a) erzeugten Bremskraft (F) auf die Bremseinrichtung (7), wobei die Übertragungseinrichtung (10) aus einem Gestänge besteht,
wobei die Antriebseinrichtungen (9, 9a) dasselbe Gestänge betätigen, so daß jede Zylinderstange (14, 14a) an derselben Übertragungseinrichtung (10) mittels einer Kupplungsvorrichtung (16) angebracht ist, welche folgendes aufweist:
- einerseits eine um eine bezüglich des Rahmens festssehende Achse zur Drehung veranlaßte Antriebswelle (17), wobei die Achse über ein Verbindungsmittel (18) wie einen drehfest mit der Antriebswelle (17) verbundenen Hebel die Schaltung der Übertragungseinrichtung (10) antreibt, und
- andererseits so viele Kupplungsvorrichtungen (19) mit den Enden der Zylinderstangen (14, 14a) zusammenwirken, wie Antriebseinrichtungen (9, 9a) vorgesehen sind,
**dadurch GEKENNZEICHNET**, daß
- jede Kupplungsvorrichtung (19) aus folgendem gebildet ist:
· einerseits einem sogenannten Stützteil (25, 25a), das drehfest mit der Antriebswelle (17) verbunden und im wesentlichen radial zu dieser angeordnet ist, und
· andererseits einer sogenannten komplementären Einrichtung (26, 26a), die der Verlagerung der Zylinderstange (14, 14a) zugeordnet ist und mit einem Anschlag auf dem Stützteil (25, 25a) so gekoppelt ist, daß die Antriebswelle (17) und der Hebel (18) nur dann in Drehung antreibbar sind, wenn die Zylinderstange sich in einer vorgegebenen Richtung, nämlich in Bremsrichtung verlagert,
- daß die Stützteile (25, 25a) und die komplementäre Einrichtung (26, 26a) um die Welle (17) so angetrieben werden, daß bei Ankopplung einer der komplementären Einrichtungen (26, 26a) an das entsprechende Stützteil (25, 25a) die anderen komplementären Einrichtungen und Stützteile abgekoppelt werden.

2. Bremssystem nach Anspruch 1,
**dadurch gekennzeichnet**, daß
- die Elemente, nämlich das Stützteil (25, 25a) und die komplementäre Einrichtung (26, 26a) jeweils aus einem Haken bestehen, der in einem bestimmten Abstand (D) von der Achse der Antriebswelle von einem Hebel (27, 27a) gehalten wird, während das jeweils andere Element aus einem Zapfen besteht, der von einem Hebel (28, 28a) in gleichem Abstand (D) von der Achse der Antriebswelle (17) gehalten wird, um welche das entsprechende Ende (29) des Hebels (28) frei drehbar angebracht ist, welcher dann, wenn die Zylinderstange, die an ihrem Ende (30) angebracht ist, sich in die sogenannte Bremsrichtung bewegt, in Eingriff in den Haken (25, 25a) gelangt, und daß
- die konkaven Bereiche der Haken (25, 25a) in gleicher trigonometrischer Richtung und in Bremsrichtung ausgerichtet sind, während die Stangen (14, 14a) der Zylinder (11, 11a) der Antriebseinrichtungen (9, 9a) in umgekehrter trigonometrischer Richtung wirksam sind, bezogen auf die Richtung, in welche die konkaven Bereiche der Haken weisen.

3. Bremssystem nach Anspruch 1 oder 2,
**dadurch gekennzeichnet**, daß der Korpus (12, 12a) des Zylinders am Fahrzeugrahmen (13) mittels einer Befestigungseinrichtung (32) angebracht ist, wobei die Befestigungseinrichtung in der Ebene der Drehbewegung der Hebel (28, 28a) eine seitliche Auslenkung des Zylinders (11, 11a) gestattet.

4. Bremssystem nach einem der Ansprüche 1 bis 4,
**dadurch gekennzeichnet**, daß die Anlenkung (31) zwischen der Zylinderstange (14, 14a) und dem Hebel (28, 28a) so gestaltet ist, daß sie eine geradlinige Bahn für die Zylinderstange und eine gebogene Bahn für den Hebel ermöglicht, ohne eine Belastung für das eine Teil oder das andere (28, 28a, 14, 14a) herbeizuführen.

5. Bremssystem nach einem der Ansprüche 1 bis 4,
**dadurch gekennzeichnet**, daß der Hebel (28, 28a), der den Zapfen (26, 26a) trägt, aus zwei zueinander parallelen Hebeln (33, 34) gebildet ist, welche sich in einem Abstand voneinander befinden, der etwas größer ist als die größtmögliche Dicke (E) des Hakens und des den Haken tragenden Hebels in ihrer Gesamtheit, wobei sich diese Baugruppe zwischen den beiden Hebeln (33, 34) befindet.

6. Bremssystem nach einem der Ansprüche 1 bis 5,
**dadurch gekennzeichnet**, daß die Hebel, welche die den verschiedenen Antriebseinrichtungen zugeordneten Zapfen tragen, bezüglich der Achse der Antriebswelle diametral einander gegenüber angeordnet sind.

7. Bremssystem nach Anspruch 1, bei welchem zur Zuleitung eines Strömungsmittels zu einem der Zylinder die Versorgungseinrichtung eine Hauptleitung (35, 35a), einen Verteiler (36, 36a), Absperrhähne sowie einen Reservebehälter (37, 37a) für das Strömungsmittel aufweist und die Hauptleitung (35, 35a) für den Anschluß über mindestens eines ihrer Enden an eine Steuervorrichtung vorgesehen ist, welche das Strömungsmittel unter Druck zuführt, bzw. bei Zusammenstellung einer kompletten Zuggarnitur für den Anschluß über ihre beiden Seiten an die beidseitig anschließenden Wagen vorgesehen ist, und zwar mittels Verbindungsanschlüssen (38, 38a),
**dadurch gekennzeichnet**, daß zur Unterscheidung dieser Verbindungsanschlüsse (38, 38a) in der Weise, daß ein Anschluß des einen Typs mit einem Anschluß eines anderen Typs nicht möglich ist, einer der beiden Anschlüsse mit einer mechanischen Differenziereinrichtung (39) versehen ist.

8. Bremssystem nach Anspruch 7,
**dadurch gekennzeichnet**, daß die mechanische Differenziereinrichtung (39) eine Unverwechselbarkeitseinrichtung bzw. -nut ist.
